# EUROPEAN PATENT APPLICATION

(11) **EP 2 037 355 A2**
(43) Date of publication of application: **18.03.2009**
(21) Application number: 08252788.8
(22) Date of filing: 21.08.2008
(51) Int. Cl.: G06F 3/12

(54) **Image forming appartus and mehtod, computer program product, and image forming system**

(30) Priority: 11.09.2007 JP 2007235226
(71) Applicant: Ricoh Company, Ltd., Ohta-ku Tokyo 143-8555 (JP)
(72) Inventor: Kazume, Minako c/o Ricoh Co., Ltd., Ohta-ku Tokyo 143-8555 (JP)
(74) Representative: Mounteney, Simon James

(57) **Abstract**

An image forming apparatus includes a determination unit (152) that determines whether data indicating setting an operation mode of the image forming apparatus (100) to an auto-restart prevention mode is received from an information processing apparatus (300). If such data is received, a setting unit (153) stores the data in a mode storage unit (104) whereby an operation mode of the image forming apparatus is set to the auto-restart prevention mode.

## Description

### BACKGROUND OF THE INVENTION

### 1. Field of the Invention

The present invention relates to a technology for responding to an output failure in an image forming apparatus.

### 2. Description of the Related Art

Recently, a technology for printing print data in the following manner is generally used. That is, an image forming apparatus such as a printer connected to a network prints print data transmitted from an information processing apparatus such as a host personal computer (host PC). Japanese Patent Application Laid-open No. 2003-122539 discloses a technology for such a printer in which if a failure occurs in a printing process of print data sent from the host PC, or if the printer fails to receive a part of the print data transmitted from a host PC (client), the printer specifies the data which the reception failed and requests the host PC to retransmit that data, and receives the requested print data through a data retransfer service, and continues a printing process.

Japanese Patent Application Laid-open No. 2002-189581 discloses a technology in which when a first printer receives a first print job (push print job) from a user's computer and can not print the first print job due to occurrence of an error, the first printer searches for a second printer on a network, issues a second print job (pull print job) which is newly created based on the first print job to the second printer, and the second printer executes printing.

In the technology disclosed in Japanese Patent Application Laid-open No. 2003-122539, however, the printing process is not specified to a printing process based on a protocol of a complete synchronization system in which a printer always responds to transmission from the host PC, and this feature may cause communication to be finished when the print data is transmitted from the host PC to the printer. If a failure occurs in the printer in such a case, the host PC cannot recognize information indicating until which page the printing is successfully performed or in which page an error occurs. In the technology disclosed in Japanese Patent Application Laid-open No. 2003-122539, if a failure occurs in the printer, the print data is received from the data storage server and the printing process is thereby always continued, and thus any other process such as discontinuation of the printing process is not performed. Moreover, in the technology disclosed in Japanese Patent Application Laid-open No. 2002-189581, if the second printer capable of printing is available after an error occurs, the second printer always obtains the print data from the first printer to execute printing, and thus any other process such that the printing is not executed is not performed. Namely, in the both technologies, when the failure is recovered after the failure has occurred in the printer, it is impossible to set whether the printing is restarted, from the host PC side, and thus any process after occurrence of the failure cannot be selected from the host PC side, which causes usability to decrease.

### SUMMARY OF THE INVENTION

It is an object of the present invention to at least partially solve the problems in the conventional technology.

According to an aspect of the present invention, there is provided an image forming apparatus, which is connected to an information processing apparatus through a network, including a mode storage unit configured to store therein an operation mode; a reception unit that receives a device acquisition command that contains an operation mode, output-object data, and an output request of the output-object data from the information processing apparatus; a determination unit that determines whether the operation mode specified in the device acquisition command is an auto-restart prevention mode, the auto-restart prevention mode being a mode for preventing restart of output of the output-object data after recovery from an output failure having occurred during reception of the output-object data; a setting unit that stores, when the determination unit determines that the operation mode is the auto-restart prevention mode, the auto-restart prevention mode in the mode storage unit thereby setting the auto-restart prevention mode as an operation mode; a transmission unit that transmits device information indicating that the auto-restart prevention mode is set in the image forming apparatus to the information processing apparatus; and an outputting unit that outputs the output-object data specified in the device acquisition command according to the operation mode set by the setting unit.

According to another aspect of the present invention, there is provided an image forming method that is realized on an image forming apparatus that is connected to an information processing apparatus through a network. The image forming method includes receiving a device acquisition command that contains an operation mode, output-object data, and an output request of the output-object data from the information processing apparatus; determining whether the operation mode specified in the device acquisition command is an auto-restart prevention mode, the auto-restart prevention mode being a mode for preventing restart of output of the output-object data after recovery from an output failure having occurred during reception of the output-object data; setting, when it is determined at the determining that the operation mode is the auto-restart prevention mode, an operation mode of the image forming apparatus to the auto-restart prevention mode; transmitting device information indicating that the auto-restart prevention mode is set in the image forming apparatus to the information processing apparatus; and outputting the output-object data specified in the device acquisition command according to the operation mode set at the setting.

According to still another aspect of the present invention, there is provided a computer program product that includes computer program codes stored on a computer-readable recording medium that when executed on an image forming apparatus that is connected to an information processing apparatus through a network causes the image forming apparatus to execute the above image forming method.

According to still another aspect of the present invention, there is provided an image forming system comprising an image forming apparatus and an information processing apparatus connected to each other via a network. The image forming apparatus includes a mode storage unit configured to store therein an operation mode; a reception unit that receives a device acquisition command that contains an operation mode, output-object data, and an output request of the output-object data from the information processing apparatus; a determination unit that determines whether the operation mode specified in the device acquisition command is an auto-restart prevention mode, the auto-restart prevention mode being a mode for preventing restart of output of the output-object data after recovery from an output failure having occurred during reception of the output-object data; a setting unit that stores, when the determination unit determines that the operation mode is the auto-restart prevention mode, the auto-restart prevention mode in the mode storage unit thereby setting the auto-restart prevention mode as an operation mode; a transmission unit that transmits device information indicating that the auto-restart prevention mode is set in the image forming apparatus to the information processing apparatus; and an outputting unit that outputs the output-object data specified in the device acquisition command according to the operation mode set by the setting unit. The information processing apparatus includes a data storage unit that stores therein the output-object data to be sent to the image forming apparatus; and a communication unit that transmits the device acquisition command, the output-object data, and the output request to the image forming apparatus, and receives the device information from the image forming apparatus.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a configuration of a printer according to a first embodiment of the present invention;
Fig. 2 is a diagram for explaining a format of a response transmitted from the printer to a host PC according to the first embodiment;
Fig. 3 is a diagram of an example of a procedure of a printing process executed by the host PC and the printer according to the first embodiment;
Fig. 4 is a flowchart of an auto-restart prevention mode setting process executed by the printer according to the first embodiment;
Fig. 5 is a flowchart of a status-monitor-command transmission process executed by the host PC according to the first embodiment;
Fig. 6 is a flowchart of a procedure executed by the printer according to the first embodiment after a failure occurs;
Fig. 7 is a diagram of another example of the procedure of the printing process executed by the host PC and the printer according to the first embodiment;
Fig. 8 is a block diagram of a configuration of a printer according to a second embodiment of the present invention;
Fig. 9 is a diagram of an example of a procedure of a printing process executed by a host PC and the printer according to the second embodiment;
Fig. 10 is a flowchart of a cancel-command transmission process executed by the host PC according to the second embodiment;
Fig. 11 is a flowchart of a procedure executed by the printer according to the second embodiment after a failure occurs;
Fig. 12 is a block diagram of a configuration of a printer according to a third embodiment of the present invention;
Fig. 13 is a diagram of an example of a procedure of a printing process executed by a host PC and the printer according to the third embodiment;
Fig. 14 is a flowchart of a jam-recovery off mode setting process executed by the printer according to the third embodiment;
Fig. 15 is a flowchart of a procedure executed by the printer according to the third embodiment after a failure occurs; and
Fig. 16 is a block diagram of a hardware configuration of the printers according to the first to the third embodiments.

### DETAILED DESCRIPTION OF THE PREFERRED EMBODIMENTS

Exemplary embodiments of the present invention are explained in detail below with reference to the accompanying drawings. The following embodiments represent examples of a printing system in which the image forming apparatus according to the present invention is a printer and the information processing apparatus is a host PC. However, the image forming apparatus is not limited to the printer, that is, the present invention can be applied to any device that performs image forming process, such as a multifunction product, a copier, and a facsimile. Moreover, the information processing apparatus is not limited to the host PC, that is, the present invention can be applied to any device that can transmit print data to be printed to the printer or the like.

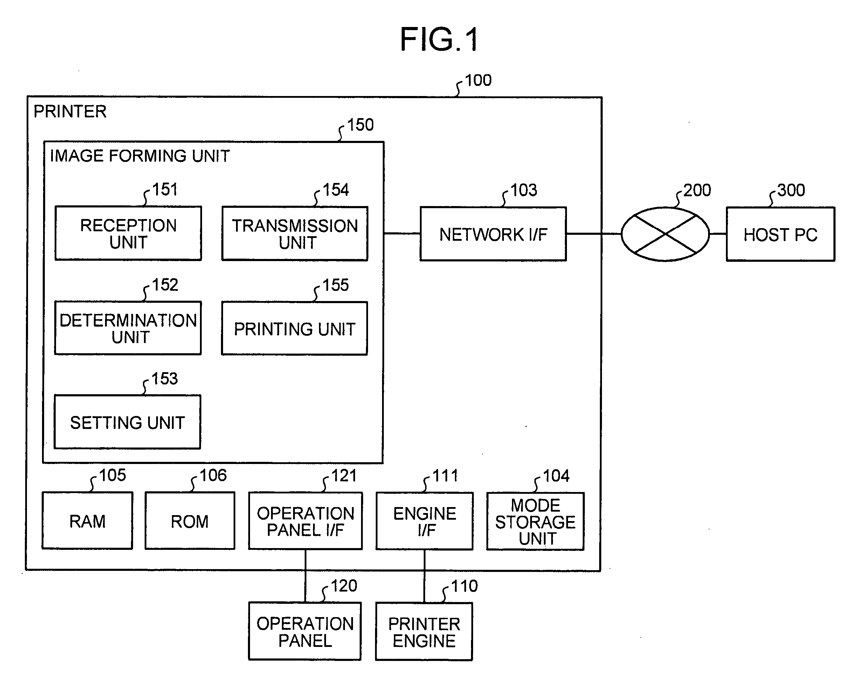

A printing system according to a first embodiment includes, as shown in Fig. 1, a host PC 300 and a printer 100 connected to each other via a network 200. The printing system executes printing while receiving or transmitting a command and a response. More specifically, the printing system executes printing by starting a session using a device acquisition command sent from the host PC 300 and a response of the printer 100 to the command, transmitting print data for each page from the host PC 300 to the printer 100, and transmitting a response from the printer 100 to the host PC 300. The session is further continued by transmitting a status monitor command which is an instruction indicating that the status of the printer 100 needs to be monitored from the host PC 300 to the printer at predetermined time intervals, and transmitting page information indicative of completion of printing from the printer 100 to the host PC 300 each time page-by-page printing is completed. Then, the host PC 300 synchronously obtains the information indicative of the completion of printing for each page at predetermined intervals, transmits a device release command to the printer 100 when printing of the last page is completed, receives a response from the printer 100, and ends the session. With this configuration, the information for the printing status of the printer 100 is synchronously transmitted to the host PC 300, and the host PC 300 can synchronously learn completion of the printing in the printer 100 for each page within the same session.

The host PC 300 includes a communication unit, a data storage unit, an application unit, a display unit, and an input unit (not shown). The data storage unit is a recording medium such as a hard disk drive (HDD) and a memory that stores therein print data to be printed by the printer 100. When the print data stored in the data storage unit is to be printed, the host PC 300 transmits a device acquisition command, print data, and a print request of the print data to the printer 100 through the communication unit, and receives device information as a response from the printer 100. The host PC 300 also transmits a status monitor command to the printer 100 at a predetermined interval. When a print failure occurs in the printer 100, the host PC 300 also transmits a status monitor command to the printer 100. The device acquisition command and the device information will be explained later when the configuration of the printer 100 is explained.

The network 200 is a telephone line, a wireless network, the Internet, or the like, and connects between the host PC 300 and the printer 100.

The printer 100 prints the print data transmitted from the host PC 300. Fig. 1 is a detailed block diagram of the printer 100. The printer 100 includes a network interface (I/F) 103, an operation panel I/F 121, an operation panel 120, an engine I/F 111, a printer engine 110, a mode storage unit 104, a random access memory (RAM) 105, a read only memory (ROM) 106, and an image forming unit 150.

The network I/F 103 controls an input/output to/from the host PC 300.

The operation panel I/F 121 controls an input/output to/from the operation panel 120. The operation panel 120 displays various screens to the user, and allows the user to enter data through the displayed screens and operation keys.

The engine I/F 111 controls the printer engine 110. The printer engine 110 prints an image on a sheet of paper or the like based on image data.

The mode storage unit 104 is a recording medium such as an HDD and a memory that stores therein an operation mode for specifying an operation to be executed in the printer 100. The operation mode is, for example, an auto-restart prevention mode. The auto-restart prevention mode is a mode for preventing restart of printing of previously received print data or not restarting the printing when any failure, such as "paper out", occurs in the printer 100 during reception of the print data from the host PC 300 and the failure is recovered by supplying paper or the like.

The RAM 105 temporarily stores therein print data received from the host PC 300. The ROM 106 stores therein various computer programs such as an image forming program, a printing program.

The image forming unit 150 performs processes for the print data. The image forming unit 150 includes a reception unit 151, a determination unit 152, a setting unit 153, a transmission unit 154, and a printing unit 155.

The reception unit 151 receives a device acquisition command which is an instruction to specify an operation mode for operating the printer, print data, and a print request of the print data from the host PC 300. Contained in the device acquisition command is, for example, information specifying whether the auto-restart prevention mode which is one of operation modes is to be set, and the printer 100 performs setting of the operation mode and the like according to the information. The reception unit 151 receives a status monitor command which is an instruction indicating that the status of the printer 100 needs to be monitored at predetermined intervals during printing of the print data. The reception unit 151 also receives a status monitor command indicating that the status of the printer 100 is monitored from the host PC 300 after any print failure occurs during reception of the print data transmitted from the host PC 300.

The determination unit 152 determines whether the operation mode specified by the device acquisition command is the auto-restart prevention mode by referring to the received device acquisition command. When the operation mode is the auto-restart prevention mode, the determination unit 152 further determines whether the operation mode is set to the auto-restart prevention mode. The determination unit 152 determines whether the printer 100 supports an auto-restart prevention function by reading an operable operation mode stored in a storage medium such as a nonvolatile memory (not shown) of the printer 100. Further, the determination unit 152 determines whether the status of the printer 100 is changed after the print failure occurs in the printer 100, or whether the print failure of the printer 100 is recovered, based on a notification from the printer engine or the like. After the print failure is recovered, the determination unit 152 determines whether the operation mode of the printer 100 is set to the auto-restart prevention mode, based on whether the auto-restart prevention mode is stored in the mode storage unit 104.

When it is determined by the determination unit 152 that the operation mode specified by the device acquisition command is the auto-restart prevention mode and it is to be set to the auto-restart prevention mode, the setting unit 153 stores the auto-restart prevention mode in the mode storage unit 104 and sets the operation mode of the printer 100 to the auto-restart prevention mode.

When the auto-restart prevention mode is set to the printer 100, the transmission unit 154 transmits device information to that effect to the host PC 300 as a response to the device acquisition command. The transmission unit 154 also transmits page information indicative of the printing status of the printer 100 to the host PC 300 as a response to the status monitor command received by the reception unit 151. The transmission unit 154 also transmits page information as a response to the received status monitor command and information indicative of the recovery from the failure to the host PC 300 after the print failure occurs in the printer 100.

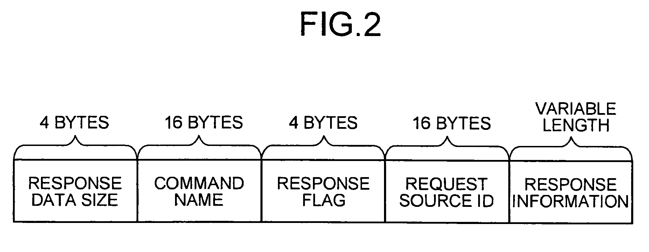

A response transmitted from the printer 100 to the host PC 300 will be explained below. Fig. 2 is a diagram for explaining a format of a response transmitted from the printer to the host PC. The response contains 4-byte "response data size", 16-byte "command name", 4-byte "response flag", 16-byte "request source identification (ID)", and "response information" that varies according to the amount of information.

The "response data size" is a size of entire data that the printer 100 responds to the host PC. The "command name" is a name of a received command as a trigger to send back a response, to indicate a particular response corresponding to any of commands received from the host PC. The "response flag" shows the status of the printer 100. The "request source ID" is an IP address of the host PC that sends the command to the printer 100. The "response information" is response information related to the printer 100 corresponding to each type of received commands, or is information for the set operation mode and information for the printing status of the print data. The response information is different depending on the types of the received commands.

A response with device information will be explained below. Specifically, the device information is transmitted to the host PC 300 when a device acquisition command is received from the host PC 300 and the auto-restart prevention mode is set in the printer 100. The "command name" of the device information as the response contains "Connect". The "response flag" contains a bit indicative of "error" that is set to "0" when there is no error. The "response information" contains "auto-restart prevention supporting" information indicative of setting of the auto-restart prevention mode.

A response with page information will be explained below. Specifically, the page information is transmitted to the host PC 300 by obtaining information for the printing status and error information in the printer 100 when the status monitor command is received from the host PC 300. The "command name" of the page information as the response contains "Polling". The "response flag" contains a bit representing error information in which the bit indicative of "error" is set to "0" when there is no error and the bit is set to "1" or the like when there is an error. The "response information" contains information such as the number of jobs processed by the printer 100, a page information table including job ID of each job and the number of pages of which print is completed, and specific error information.

The printing unit 155 outputs received print data according to the operation mode. The printing unit 155 restarts printing of the print data when it is determined that the operation mode of the printer 100 is not set to the auto-restart prevention mode.

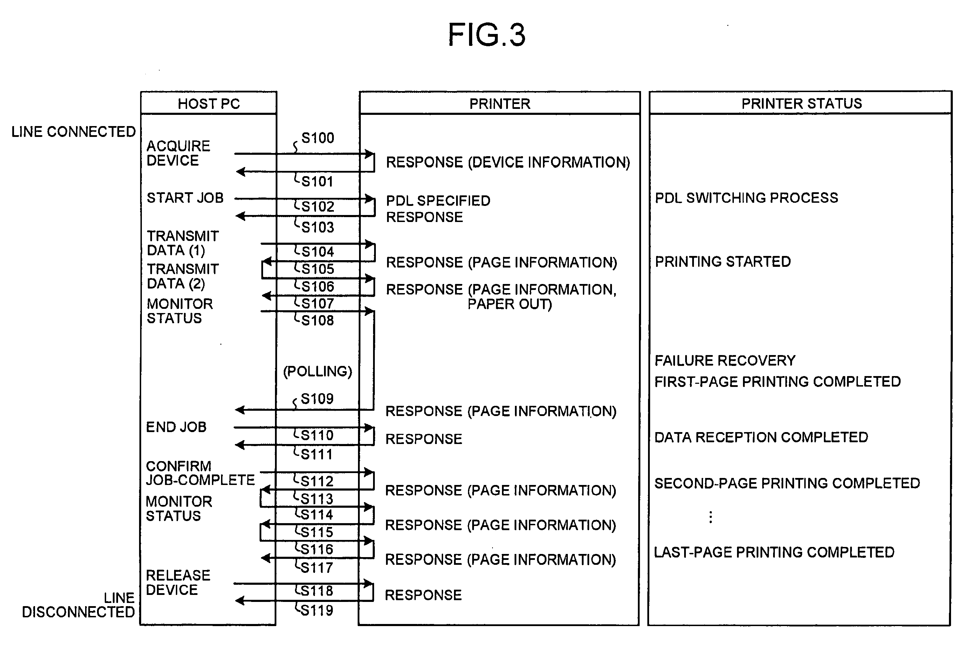

A flow of a printing process executed by the host PC 300 and the printer 100 will be explained next. Fig. 3 is a diagram of an example of a procedure of the printing process executed by the host PC and the printer. Fig. 3 represents the case in which when the operation mode of the printer 100 is not set to the auto-restart prevention mode and a print failure occurs in the printer 100, a status monitor command is transmitted from the host PC 300 to the printer 100 using a device acquisition command transmitted from the host PC 300 to the printer 100.

First, the host PC 300 establishes a session with the printer 100. Then, the host PC 300 transmits a device acquisition command to the printer 100 (Step S100), and the printer 100 transmits device information as a response to the host PC 300 (Step S101).

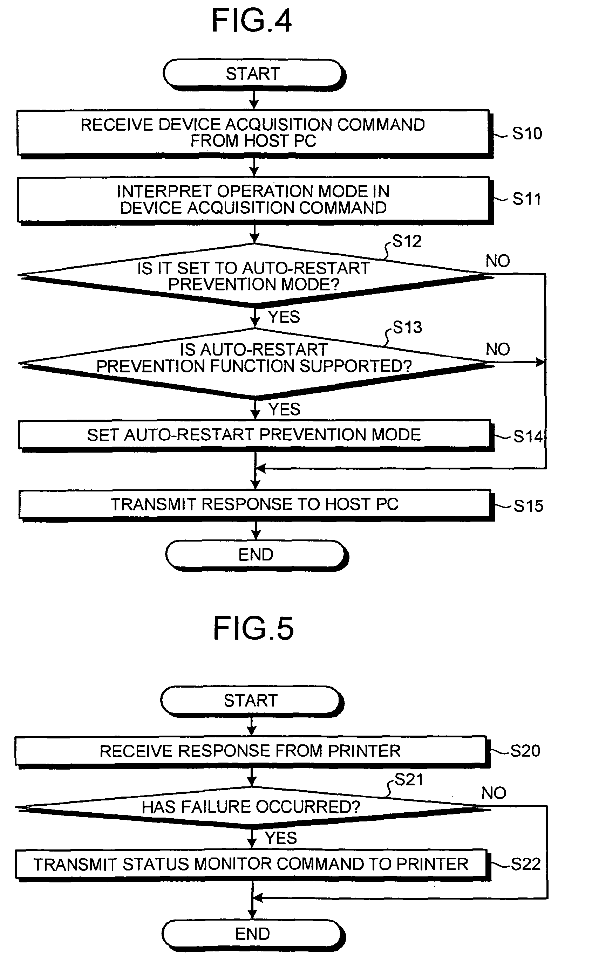

Contents of Steps S100 and S101 1 will be explained below. Fig. 4 is a flowchart of a procedure of an auto-restart prevention mode setting process in the printer 100. First, the reception unit 151 receives the device acquisition command transmitted at Step S100 of Fig. 3 from the host PC 300 (Step S10).

Next, the determination unit 152 interprets the operation mode in the device acquisition command (Step S11), and determines whether the operation mode is to be set to the auto-restart prevention mode (Step S12). When it is set to the auto-restart prevention mode (YES at Step S12), the determination unit 152 further determines whether the printer 100 supports the auto-restart prevention function (Step S 13).

When the printer 100 supports the auto-restart prevention function (YES at Step S13), the setting unit 153 stores the auto-restart prevention mode in the mode storage unit 104 and sets the operation mode of the printer 100 to the auto-restart prevention mode (Step S 14). The setting unit 153 then transmits device information, as a response, indicating that the operation mode is set to the auto-restart prevention mode to the host PC 300 (Step S15).

Meanwhile, when it is not set to the auto-restart prevention mode (NO at Step S12) and when the printer 100 does not support the auto-restart prevention function (NO at Step S13), the setting unit 153 transmits device information, as a response, indicating that the operation mode is not set to the auto-restart prevention mode to the host PC 300 (Step S15). It is noted that Fig. 3 represents the case in which the auto-restart prevention mode is not set.

Referring back to Fig. 3, the host PC 300 receives the device information as the response (Step S101), and transmits a job start notification to the printer 100 (Step S102), and the printer 100 performs a page description language (PDL) switching process and transmits a message, as a response, indicating that the PDL is specified to the host PC 300 (Step S103).

The host PC 300 then transmits print data for a first page to the printer 100 (Step S104), and the printer 100 starts printing using the received print data for the first page and transmits page information indicative of the printing status as a response to the host PC 300 (Step S105).

Next, the host PC 300 transmits print data for a second page to the printer 100 (Step S106). At this time, if any print failure such as paper out occurs in the printer 100, the printer 100 transmits page information and a message indicative of occurrence of the print failure such as paper out, as a response, to the host PC 300 (Step S107). Next, the host PC 300 transmits a status monitor command to the printer 100 (Step S108).

Contains of Steps S107 and S108 will be explained below. Fig. 5 is a flowchart of a procedure of a status-monitor-command transmission process in the host PC 300. The communication unit of the host PC 300 receives the response transmitted at Step S107 of Fig. 3 from the printer 100 (Step S20). The host PC 300 determines whether any print failure has occurred in the printer 100 by referring to "response flag" in the received page information (Step S21). If no print failure has occurred (NO at Step S21), or if the "response flag" is "0", then the process is ended as it is. On the other hand, if any print failure has occurred (YES at Step S21), or if the "response flag" is any value other than "0", then the communication unit transmits a status monitor command to the printer 100 (Step S22). It is noted that Fig. 3 represents the case in which the print failure occurs in the printer 100 and the status monitor command is therefore transmitted.

Referring back to Fig. 3, the printer 100 receives the status monitor command (Step S108), and transmits page information as a response. Note that transmission of the status monitor command at Step S108 is performed at predetermined intervals, namely, polling is performed. The printer 100 receives these status monitor commands. When the print failure of the printer 100 is recovered, printing is restarted, and printing of the first page is completed, the printer 100 transmits page information to that effect as a response to the host PC 300 (Step S109).

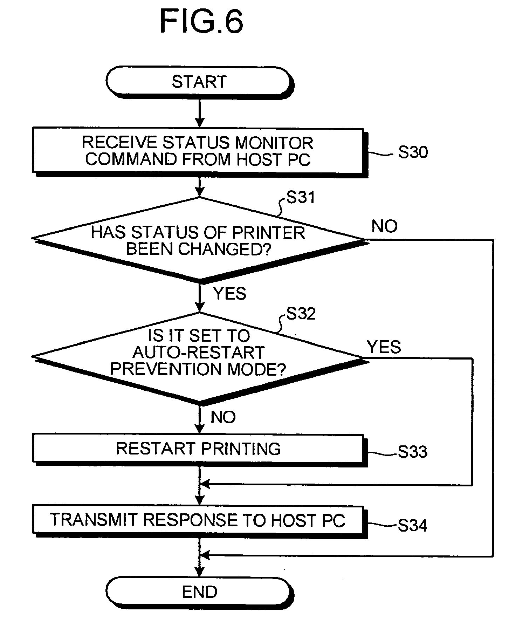

Contents of steps S108 and S109 will be explained below. Fig. 6 is a flowchart of a procedure after the failure occurs in the printer 100. First, the reception unit 151 receives the status monitor command transmitted at Step S108 of Fig. 3 from the host PC 300 (Step S30).

The determination unit 152 determines whether the status of the printer 100 has been changed, or whether the print failure of the printer has been recovered (Step S31). If the status of the printer 100 has not been changed (NO at Step S31), the determination unit 152 ends the process as it is, and again repeats the processes of Fig. 6.

Meanwhile, if the status of the printer 100 has been changed (YES at Step S31), the determination unit 152 determines whether the printer 100 is set to the auto-restart prevention mode, based on whether the auto-restart prevention mode is stored in the mode storage unit 104 (Step S32). If the printer 100 is not set to the auto-restart prevention mode (NO at Step S32), the printing unit 155 restarts printing of the print data (Step S33). When the printing unit 155 restarts the printing and completes printing of the first page, the transmission unit 154 transmits a response which is the page information to that effect to the host PC 300 (Step S34).

Meanwhile, if it is set to the auto-restart prevention mode (YES at Step S32), the printing unit 155 does not restart printing of the print data. The transmission unit 154 transmits a response indicating that the printing is not restarted to the host PC 300 (Step S34). It is noted that Fig. 3 represents the case in which the printing of the print data is restarted.

Referring back to Fig. 3, the host PC 300 receives the page information as the response (Step S109), and transmits a job end notification to the printer 100 because the job having started at step S 102 is ended due to the end of transmission of the print data (Step S 110). At this time, when reception of the print data is completed, the printer 100 transmits a response to that effect to the host PC 300 (Step S111). Next, the host PC 300 transmits job-complete confirmation to confirm whether the job is completed (Step S 112). At this time, when printing of the second page is completed, the printer 100 transmits a response to that effect to the host PC 300 (Step S 113).

The host PC 300 transmits a status monitor command to the printer 100 (Step S114), and the printer 100 transmits a response to the host PC 300 (Step S115). The host PC 300 further transmits a status monitor command to the printer 100 after a predetermined interval (Step S 116). At this time, when printing of the last page is completed, the printer 100 transmits a response to that effect to the host PC 300 (Step S117).

The host PC 300 then transmits a device release command to the printer 100 (Step S 118), and the printer 100 transmits a response to the host PC 300 (Step S 119). The host PC 300 then ends the session with the printer 100.

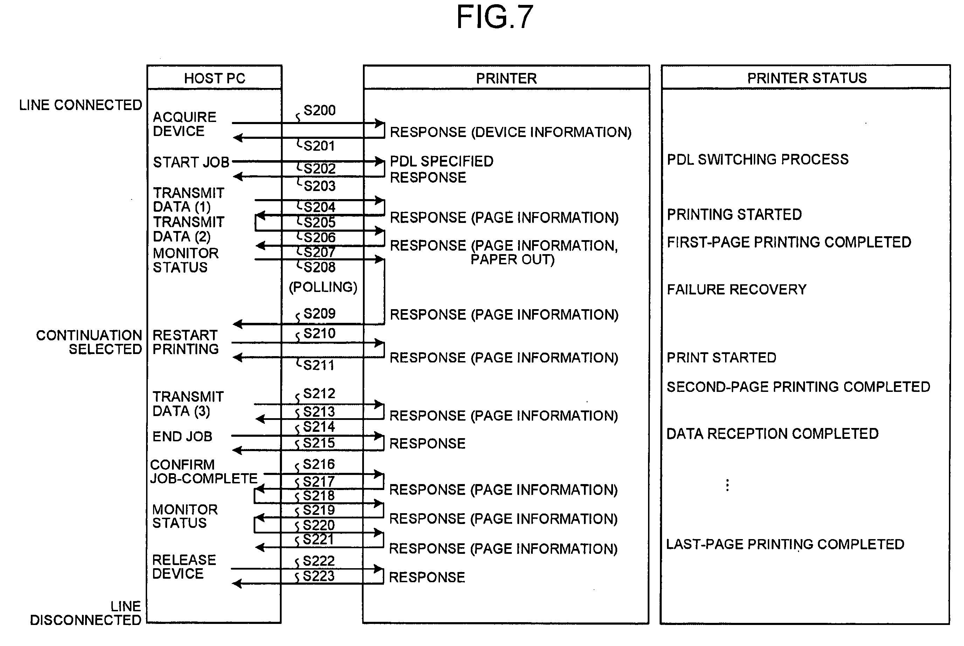

A flow of other printing process executed by the host PC 300 and the printer 100 will be explained next. Fig. 7 is a diagram of another example of the procedure of the printing process executed by the host PC 300 and the printer 100. Fig. 7 represents the case in which when the operation mode of the printer 100 is set to the auto-restart prevention mode and the print failure having occurred in the printer 100 is recovered, the printing is not restarted based on a device acquisition command transmitted from the host PC 300 to the printer 100.

First, the host PC 300 establishes a session with the printer 100. Then, the host PC 300 transmits a device acquisition command to the printer 100 (Step S200), and the printer 100 transmits device information as a response to the host PC 300 (Step S201).

Contents of Steps S200 and S201 are the same as these of Fig. 4. In this case, at Step S 14 of Fig. 4, the operation mode of the printer 100 is set to the auto-restart prevention mode.

Next, the host PC 300 transmits a job start notification to the printer 100 (Step S202), and the printer 100 performs a PDL switching process and transmits a message indicating that the PDL is specified, as a response, to the host PC 300 (Step S203).

The host PC 300 then transmits print data for a first page to the printer 100 (Step S204), and the printer 100 starts printing using the received print data for the first page and transmits page information indicative of the printing status as a response to the host PC 300 (Step S205).

Next, the host PC 300 transmits print data for a second page to the printer 100 (Step S206). At this time, when printing of the first page is completed and a print failure such as paper out occurs in the printer 100, the printer 100 transmits page information and a message indicative of occurrence of the print failure such as paper out, as a response, to the host PC 300 (Step S207). Next, the host PC 300 transmits a status monitor command to the printer 100 (Step S208). Contents of Steps S207 and S208 are the same as these of Fig. 5.

Next, the printer 100 receives the status monitor command (Step S208), and transmits page information as a response. Note that transmission of the status monitor command at Step S208 is performed at predetermined intervals, namely, polling is performed. The printer 100 receives these status monitor commands. When the print failure of the printer 100 is recovered, the printer 100 transmits page information to that effect as a response to the host PC 300 (Step S209).

The contents of Steps S208 and S209 are the same as these of Fig. 6. At Step S32 of Fig. 6, the operation mode of the printer 100 is set to the auto-restart prevention mode and printing is not therefore restarted.

The host PC 300 side can end the process as it is without restarting the printing or can start the process of restarting the printing. The following explains a case in which the printing process is restarted and the printing of the print data is selected (continuation is selected).

The host PC 300 transmits a message indicative of restart of printing (Step S210). At this time, the host PC 300 occasionally receives the page information for the printer 100, and thus does not enter a print page to be restarted. The printer 100 starts printing and transmits a response to that effect to the host PC 300 (Step S211).

The host PC 300 transmits print data for a third page (Step S212). At this time, when printing of the second page is completed, the printer 100 transmits a response to that effect to the host PC 300 (Step S213).

Next, to end the job having started at Step S202 due to the end of transmission of the print data, the host PC 300 transmits a job end notification to the printer 100 (Step S214). At this time, when reception of the print data is completed, the printer 100 transmits a response to that effect to the host PC 300 (Step S215). Next, the host PC 300 transmits job-complete confirmation to confirm whether the job is completed (Step S216), and the printer 100 transmits a response to the confirmation to the host PC 300 (Step S217).

The host PC 300 transmits a status monitor command to the printer 100 (Step S218), and the printer 100 transmits a response to the command to the host PC 300 (Step S219). The host PC 300 then transmits a status monitor command to the printer 100 after a predetermined interval (Step S220). At this time, when printing of the last page is completed, the printer 100 transmits a response to that effect to the host PC 300 (Step S221).

The host PC 300 then transmits a device release command to the printer 100 (Step S222), and the printer 100 transmits a response to the command to the host PC 300 (Step S223). The host PC 300 then ends the session with the printer 100.

As explained above, in the printer 100, the auto-restart prevention mode for preventing the printing from being restarted upon recovery from the print failure having occurred in the printer 100 can be set from the host PC 300 side using the device acquisition command received from the host PC 300. Thus, it is not always necessary to restart the printing even after recovery from the print failure, which allows improvement of usability. Further, when the printer 100 is not set to the auto-restart prevention mode, the restart of the printing can be set from the host PC 300 side using the status monitor command received by the printer 100 after occurrence of the print failure, and thus further improving the usability.

In the first embodiment, when the auto-restart prevention mode is not set and a print failure occurs in the printer 100, the printing is restarted according to an instruction from the host PC 300 using the status monitor command transmitted from the host PC 300. In contrast, in a second embodiment of the present invention explained below, when the auto-restart prevention mode is not set and a print failure occurs in a printer, unprinted print data is deleted (discarded) using a cancel command transmitted from the host PC.

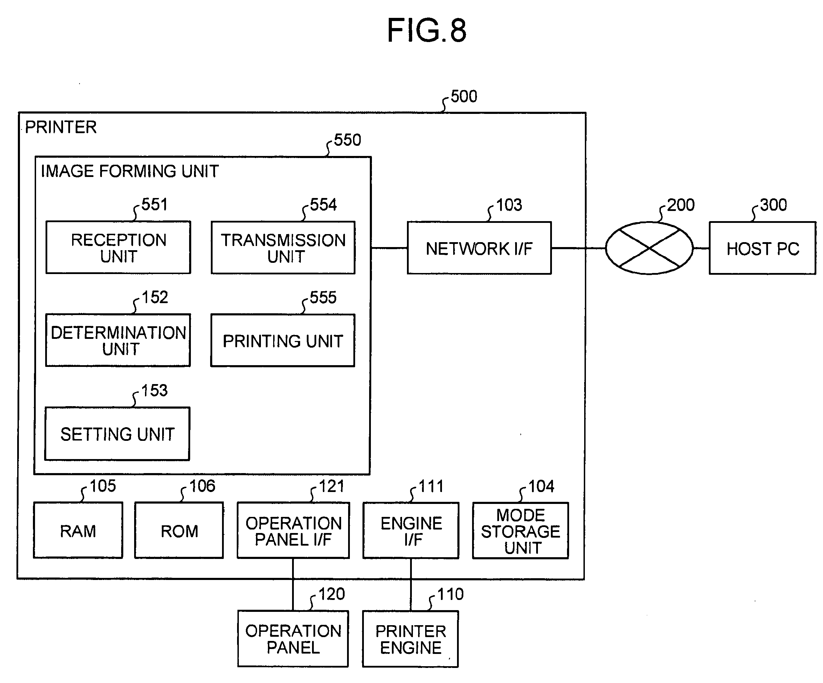

Fig. 8 is a detailed block diagram of a configuration of a printer 500 according to the second embodiment. The printer 500 is connected to the host PC 300 via the network 200. The function and the configuration of the network 200 are the same as these of the first embodiment, and thus explanation thereof is omitted.

The function and the configuration of the host PC 300 are the same as these of the first embodiment, however, when a print failure occurs in the printer 500, the host PC 300 transmits a cancel command for discarding unprinted print data to the printer 500.

The printer 500 prints the print data transmitted from the host PC 300. The printer 500 includes the network I/F 103, the operation panel I/F 121, the operation panel 120, the engine I/F 111, the printer engine 110, the mode storage unit 104, the RAM 105, the ROM 106, and an image forming unit 550. Here, each function and configuration of the components except for the image forming unit 550 are the same as these of the first embodiment, and thus explanation thereof is omitted.

The image forming unit 550 performs processes related to print data. The image forming unit 550 includes a reception unit 551, the determination unit 152, the setting unit 153, a transmission unit 554, and a printing unit 555. Here, each function and configuration of the determination unit 152 and the setting unit 153 are the same as these of the first embodiment, and thus explanation thereof is omitted.

The reception unit 551 receives a device acquisition command with a specified operation mode, print data, and a print request of the print data from the host PC 300. The reception unit 551 also receives a status monitor command being an instruction indicating that the status of the printer 500 needs to be monitored at predetermined intervals during printing of the print data. Further, the reception unit 551 receives a cancel command indicating that the unprinted print data is deleted (discarded) from the host PC 300 after any print failure occurs during reception of the print data transmitted from the host PC 300.

When the setting unit 153 sets the auto-restart prevention mode in the printer 100, the transmission unit 554 transmits device information to that effect to the host PC 300 as a response to the device acquisition command. After the print failure occurs in the printer 500, the transmission unit 554 transmits a notification that the unprinted print data has been deleted to the host PC 300 as a response to the cancel command received by the reception unit 551.

The printing unit 555 outputs the received print data according to the operation mode. The printing unit 555 deletes the unprinted print data stored in the RAM 105 when it is determined that the operation mode of the printer 500 is not set to the auto-restart prevention mode.

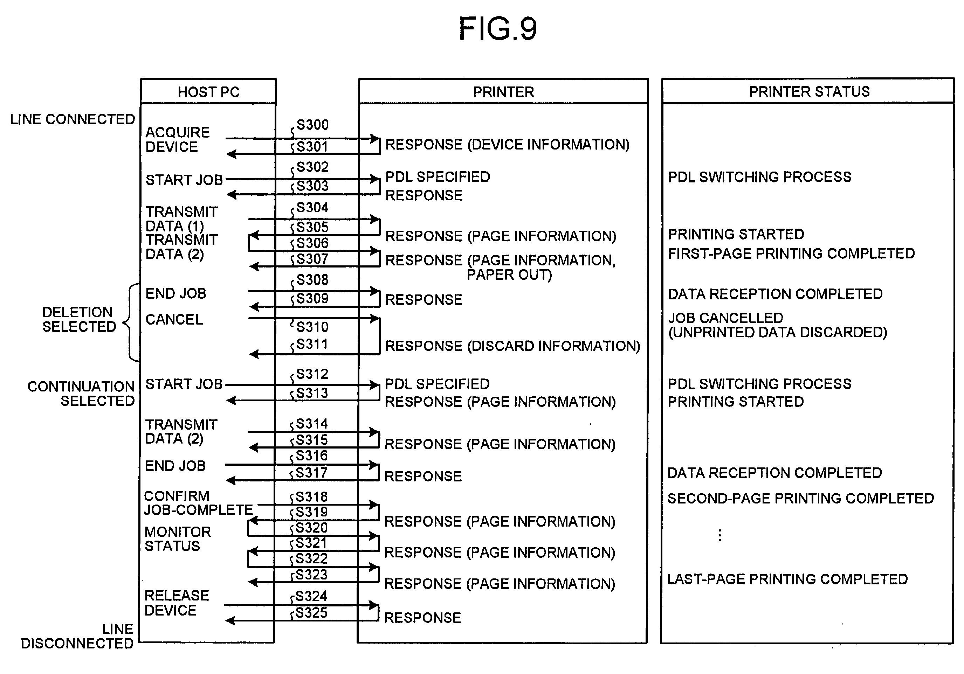

A flow of a printing process executed by the host PC 300 and the printer 500 will be explained next. Fig. 9 is a diagram of an example of a procedure of the printing process executed by the host PC 300 and the printer 500. Fig. 9 represents the case in which when the operation mode of the printer 500 is not set to the auto-restart prevention mode and a print failure occurs in the printer 500, a cancel command is transmitted from the host PC 300 to the printer 500 based on a device acquisition command transmitted from the host PC 300 to the printer 500.

First, the host PC 300 establishes a session with the printer 500. Then, the host PC 300 transmits a device acquisition command to the printer 500 (Step S300), and the printer 500 transmits device information as a response to the host PC 300 (Step S301).

Contents of Steps S300 and S301 are the same as these of Fig. 4. In this case, at Step S 14 of Fig. 4, the operation mode of the printer 500 is not set to the auto-restart prevention mode.

Next, the host PC 300 transmits a job start notification to the printer 500 (Step S302), and the printer 500 performs a PDL switching process and transmits a message indicating that the PDL is specified, as a response, to the host PC 300 (Step S303).

The host PC 300 then transmits print data for a first page to the printer 500 (Step S304), and the printer 500 starts printing using the received print data for the first page. When printing of the first page is completed, the printer 500 transmits page information to that effect as a response to the host PC 300 (Step S305).

Next, the host PC 300 transmits print data for a second page to the printer 500 (Step S306). At this time, when any print failure such as paper out occurs in the printer 500, the printer 500 transmits page information and a message indicative of occurrence of the print failure such as paper out, as a response, to the host PC 300 (Step S307).

Next, to end the job having started at Step S302 due to the end of transmission of the print data, the host PC 300 transmits a job end notification to the printer 500 (Step S308). At this time, when reception of the print data is completed, the printer 500 transmits a response to that effect to the host PC 300 (Step S309). Next, if printing is stopped and deletion of the print data is selected (deletion is selected), the host PC 300 transmits a cancel command to the printer 500 (Step S310).

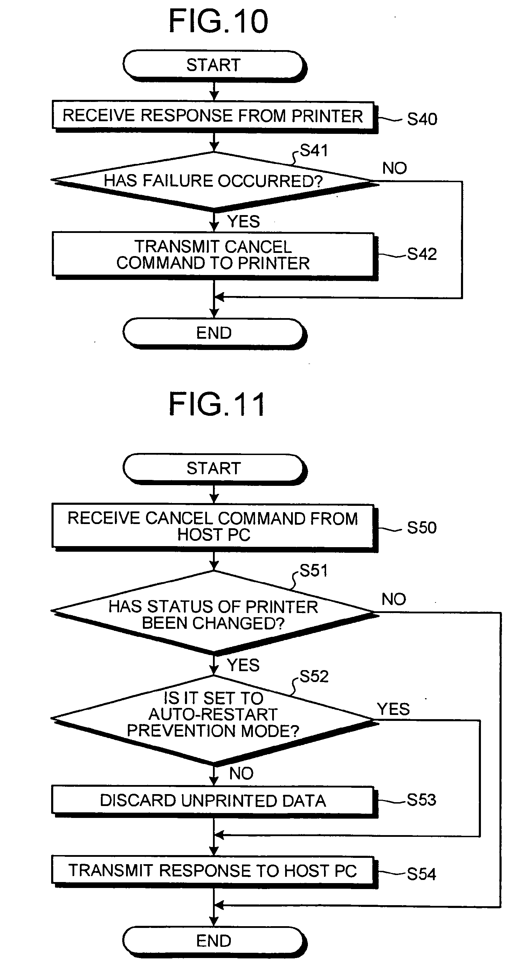

Contents of Steps S307 and S310 will be explained below. Fig. 10 is a flowchart of a procedure of a cancel-command transmission process in the host PC 300. The communication unit of the host PC 300 receives the response transmitted at Step S307 of Fig. 9 from the printer 500 (Step S40). The host PC 300 determines whether any print failure has occurred in the printer 100 by referring to "response flag" in the received page information (Step S41). If no print failure has occurred (NO at Step S41), or if the "response flag" is "0", then the process is ended as it is. Meanwhile, if any print failure has occurred (YES at Step S41), or if the "response flag" is any value other than "0", then the communication unit transmits the cancel command to the printer 500 (Step S42). It is noted that Fig. 9 represents the case in which the print failure occurs in the printer 500 and the cancel command is therefore transmitted.

Referring back to Fig. 9, the printer 500 receives the cancel command (Step S310), cancels the job, deletes (discards) the unprinted print data, and transmits discard information to that effect as a response to the host PC 300 (Step S311).

Contents of Steps S310 and S311 will be explained below. Fig. 11 is a flowchart of a procedure after a failure occurs in the printer 500. First, the reception unit 551 receives the cancel command transmitted at Step S310 of Fig. 9 from the host PC 300 (Step S50).

The determination unit 152 determines whether the status of the printer 500 has been changed, or whether the print failure of the printer has been recovered (Step S51). If the status of the printer 500 has not been changed (NO at Step S51), then the determination unit 152 ends the process as it is, and again repeats the processes of Fig. 11.

Meanwhile, if the status of the printer 500 has been changed (YES at Step S51), the determination unit 152 further determines whether the printer 500 is set to the auto-restart prevention mode based on whether the auto-restart prevention mode is stored in the mode storage unit 104 (Step S52). If it is not set to the auto-restart prevention mode (NO at Step S52), the printing unit 555 deletes the unprinted print data (Step S53), and transmits discard information indicating that the print data has been deleted as a response to the host PC 300 (Step S54).

On the other hand, when it is set to the auto-restart prevention mode (YES at Step S52), the printing unit 555 does not restart printing of the print data, but transmits a response indicating that the printing is not restarted to the host PC 300 (Step S54). It is noted that Fig. 9 represents the case where the unprinted print data is deleted.

The host PC 300 can end the printing process as it is or can start the printing by retransmitting the deleted print data. The following explains a case in which retransmission of the print data to start the printing is selected (continuation is selected).

The host PC 300 transmits a job start notification to the printer 500 to retransmit the deleted print data (Step S312). The printer 500 performs a PDL switching process to start printing, and transmits a response indicating that the PDL is specified, to the host PC 300 (Step S313).

Because printing of the first page is already completed, the host PC 300 transmits print data for a second page to the printer 500 (Step S314), and the printer 500 transmits a response to the host PC 300 (Step S315).

Next, to end the job having started at Step S312 due to the end of transmission of the print data, the host PC 300 transmits a job end notification to the printer 500 (Step S316). At this time, when reception of the print data is completed, the printer 500 transmits a response to that effect to the host PC 300 (Step S317). Next, the host PC 300 transmits job-complete confirmation to confirm whether the job is completed (Step S318). At this time, when printing of the second page is completed, the printer 500 transmits a response to that effect to the host PC 300 (Step S319).

The host PC 300 transmits a status monitor command to the printer 500 (Step S320), and the printer 500 transmits a response to the host PC 300 (Step S321). The host PC 300 further transmits a status monitor command to the printer 500 after a predetermined interval (Step S322). At this time, when printing of the last page is completed, the printer 500 transmits a response to that effect to the host PC 300 (Step S323).

The host PC 300 then transmits a device release command to the printer 500 (Step S324), and the printer 500 transmits a response to the host PC 300 (Step S325). The host PC 300 then ends the session with the printer 500.

As explained above, in the printer 500, the auto-restart prevention mode for preventing restart of the printing upon recovery from the print failure having occurred in the printer 500 can be set from the host PC 300 side using the device acquisition command received from the host PC 300. Thus, it is not always necessary to restart the printing even after recovery from the print failure, which allows improvement of usability. Furthermore, when the printer 500 is not set to the auto-restart prevention mode, deletion of the unprinted print data can be set from the host PC 300 side using the cancel command received by the printer 500 after the print failure occurs, so that the host PC 300 can instruct to discard confidential papers, and thus further improving the usability.

In the first embodiment, transmission of the device acquisition command from the host PC 300 allows setting of the auto-restart prevention mode by an instruction from the host PC. In contrast, in a third embodiment, transmission of the device acquisition command from the host PC allows setting of not performing recovery from jam by an instruction from the host PC side.

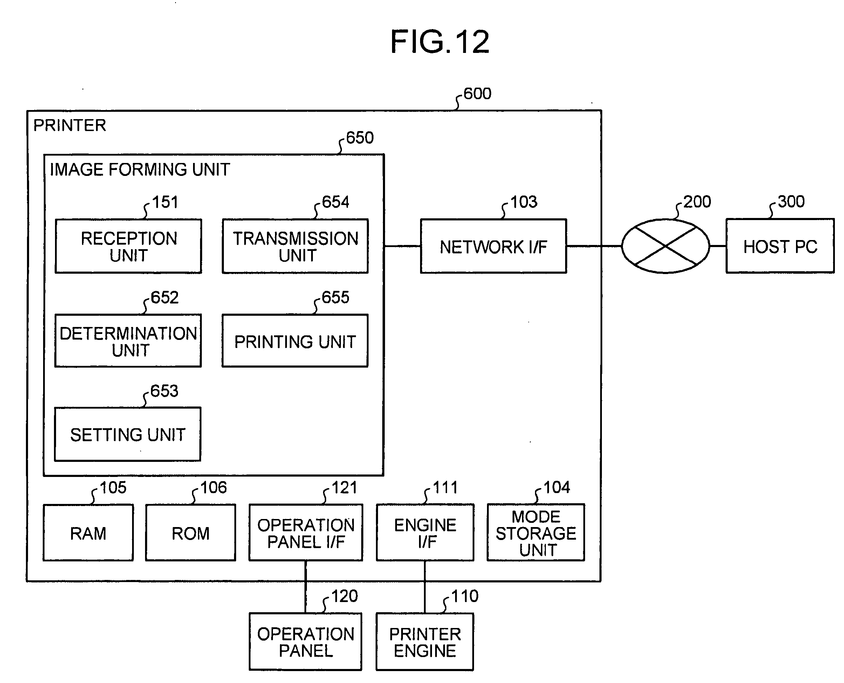

Fig. 12 is a block diagram of a configuration of a printer 600 according to the third embodiment. The printer 600 is connected to the host PC 300 via the network 200. The functions and configurations of the network 200 and the host PC 300 are the same as these of the first embodiment, and thus explanation thereof is omitted.

The printer 600 prints the print data transmitted from the host PC 300. The printer 600 includes the network I/F 103, the operation panel I/F 121, the operation panel 120, the engine I/F 111, the printer engine 110, the mode storage unit 104, the RAM 105, the ROM 106, and an image forming unit 650. Here, each function and configuration of the components except for the image forming unit 650 are the same as these of the first embodiment, and thus explanation thereof is omitted.

The image forming unit 650 performs processes related to print data. The image forming unit 650 includes the reception unit 151, a determination unit 652, a setting unit 653, a transmission unit 654, and a printing unit 655. Here, the function and configuration of the reception unit 151 are the same as these of the first embodiment, and thus explanation thereof is omitted.

The determination unit 652 determines whether the operation mode specified by the device acquisition command is a jam-recovery off mode by referring to the device acquisition command received by the reception unit 151. When it is the jam-recovery off mode, the determination unit 652 further determines whether the operation mode is to be set to the jam-recovery off mode. The determination unit 652 also determines whether the printer 600 supports a jam-recovery off function. Furthermore, the determination unit 652 determines whether the status of the printer 600 has been changed, or whether a print failure of the printer 600 is recovered after the print failure occurs in the printer 600. The determination unit 652 further determines whether the operation mode of the printer 600 is set to the jam-recovery off mode after the print failure is recovered, based on whether the jam-recovery off mode is stored in the mode storage unit 104. The jam-recovery off mode is one of the operation modes, such that a jam occurs in the printer 600 during reception of the print data from the host PC 300, a process for the jam being the print failure is not recovered after the print failure is recovered by removing the jam. The process for the jam includes an auto-restart of printing by instructing to again set an original in printing when the jam occurs.

When it is determined that the operation mode specified by the device acquisition command is the jam-recovery off mode and the operation mode is to be set to the jam-recovery off mode, the setting unit 653 stores the jam-recovery off mode in the mode storage unit 104 and sets the operation mode of the printer 600 to the jam-recovery off mode.

When the setting unit 653 sets the jam-recovery off mode in the printer 600, the transmission unit 654 transmits device information to that effect as a response to the device acquisition command to the host PC 300. The transmission unit 654 also transmits page information indicative of the printing status of the printer 600 as a response to the status monitor command received by the reception unit 151 to the host PC 300. After the print failure occurs in the printer 600, the transmission unit 654 further transmits page information as a response to the status monitor command received by the reception unit 151 and a message indicating that the failure is recovered to the host PC 300.

The printing unit 655 outputs the received print data according to the operation mode. When it is determined that the operation mode of the printer 600 is set to the jam-recovery off mode, the printing unit 655 deletes unprinted print data stored in the RAM 105.

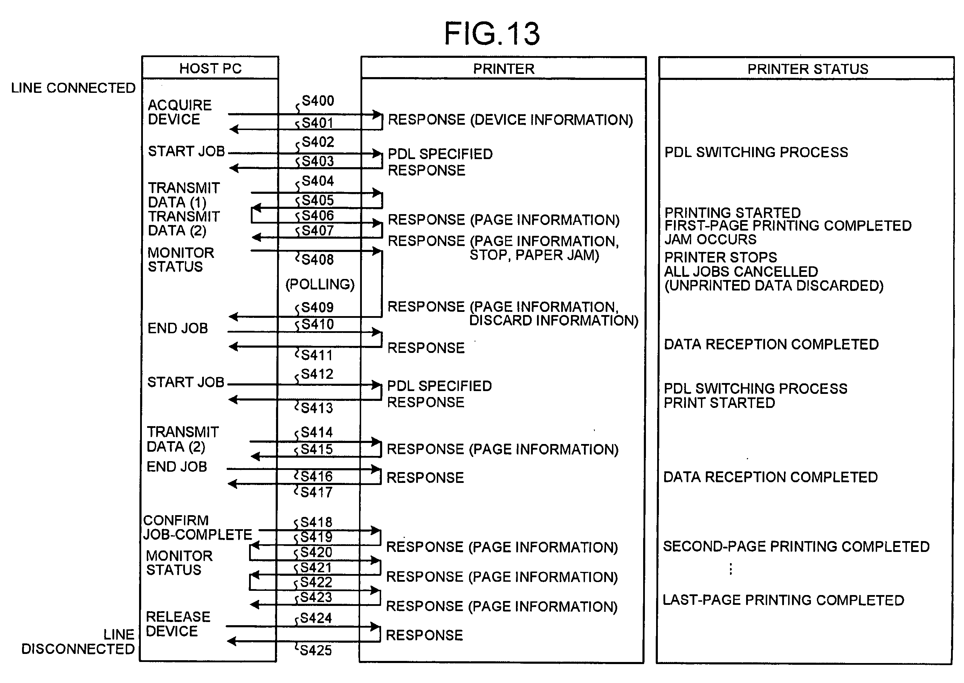

A flow of a printing process executed by the host PC 300 and the printer 600 will be explained next. Fig. 13 is a diagram of an example of a procedure of the printing process executed by the host PC 300 and the printer 600. Fig. 13 represents the case in which when the operation mode of the printer 600 is set to the jam-recovery off mode and the print failure having occurred in the printer 600 is recovered, print data is deleted using a device acquisition command transmitted from the host PC 300 to the printer 600.

First, the host PC 300 establishes a session with the printer 600. Then, the host PC 300 transmits a device acquisition command to the printer 600 (Step S400), and the printer 600 transmits device information as a response to the host PC 300 (Step S401).

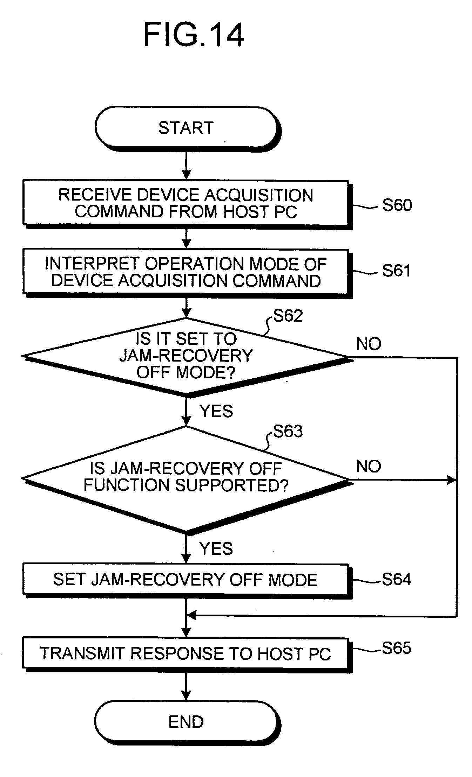

Contents of Steps S400 and S401 will be explained below. Fig. 14 is a flowchart of a procedure of a jam-recovery off mode setting process in the printer 600. First, the reception unit 151 receives the device acquisition command transmitted at Step S400 of Fig. 3 from the host PC 300 (Step S60).

Next, the determination unit 652 interprets the operation mode of the device acquisition command (Step S61), and determines whether the operation mode is set to the jam-recovery off mode (Step S62). When the operation mode is set to the jam-recovery off mode (YES at Step S62), the determination unit 652 further determines whether the printer 600 supports the jam-recovery off function (Step S63).

When the printer 600 supports the jam-recovery off function (YES at Step S63), the setting unit 653 stores the jam-recovery off mode in the mode storage unit 104, to set the operation mode of the printer 600 to the jam-recovery off mode (Step S64). Then, the setting unit 653 transmits device information, as a response, indicating that the operation mode is set to the jam-recovery off mode to the host PC 300 (Step S65).

Meanwhile, when the operation mode is not set to the jam-recovery off mode (NO at Step S62) and when the printer 600 does not support the jam-recovery off function (NO at Step S63), the setting unit 653 transmits device information, as a response, indicating that the operation mode is not set to the jam-recovery off mode to the host PC 300 (Step S65). It is noted that Fig. 13 represents the case in which the jam-recovery off mode is set.

Next, the host PC 300 transmits a job start notification to the printer 600 (Step S402), and the printer 600 performs a PDL switching process and transmits a message indicating that the PDL is specified, as a response, to the host PC 300 (Step S403).

The host PC 300 transmits print data for a first page to the printer 600 (Step S404), and the printer 600 starts printing using the received print data for the first page. When printing of the first page is completed, the printer 600 transmits page information to that effect as a response to the host PC 300 (Step S405).

Next, the host PC 300 transmits print data for a second page to the printer 600 (Step S406). At this time, if the printer 600 stops and it is found that a print failure such as "jam" occurs, the printer 600 transmits page information and a message indicating that the printer 600 stops and the print failure such as paper jam occurs, as a response, to the host PC 300 (Step S407). Next, the host PC 300 transmits a status monitor command to the printer 600 (Step S408). Contents of Steps S407 and S408 are the same as these of Fig. 5 according to the first embodiment.

Next, the printer 600 transmits page information as a response to the status monitor command. Note that transmission of the status monitor command at Step S408 is performed at predetermined intervals, namely, polling is performed. The printer 600 receives these status monitor commands. When all the jobs are cancelled and unprinted print data is discarded, the printer 600 transmits page information to that effect as a response to the host PC 300 (Step S409).

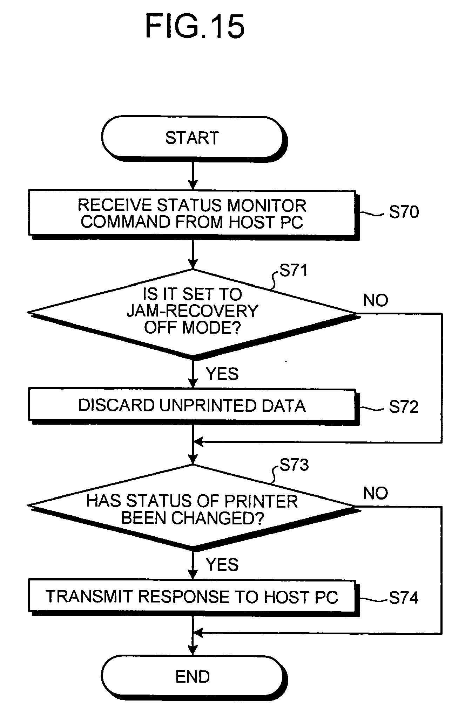

Contents of Steps S408 and S409 will be explained below. Fig. 15 is a flowchart of a procedure after a failure occurs in the printer 600. First, the reception unit 151 receives the status monitor command transmitted at Step S408 of Fig. 13 from the host PC 300 (Step S70).

The determination unit 652 determines whether the printer 600 is set to the jam-recovery off mode, based on whether the jam-recovery off mode is stored in the mode storage unit 104 (Step S71). When it is set to the jam-recovery off mode (YES at Step S71), the printing unit 655 deletes (discards) the unprinted print data stored in the RAM 105 (Step S72). Meanwhile, when it is not set to the jam-recovery off mode (NO at Step S71), the printing unit 655 does not delete the print data, and the process proceeds to Step S73.

Next, the determination unit 652 determines whether the status of the printer 600 has been changed, or whether the print failure (jam) of the printer 600 has been recovered (Step S73). If the status of the printer 600 has not been changed (NO at Step S73), the determination unit 652 ends the process as it is.

On the other hand, if the status of the printer 600 has been changed (YES at Step S73), the transmission unit 654 transmits a response indicative of recovery from the failure to the host PC 300 (Step S74). It is noted that Fig. 13 represents the case in which the printer 600 is set to the jam-recovery off mode and the unprinted print data is deleted.

Referring back to Fig. 13, to end the job having started at Step S402 due to the end of transmission of the print data, the host PC 300 transmits a job end notification to the printer 600 (Step S410). At this time, when reception of the print data is completed, the printer 600 transmits a response to that effect to the host PC 300 (Step S411).

The host PC 300 can end the printing process as it is or can start printing by retransmitting the deleted print data. Fig. 13 represents the case in which the print data is transmitted again, to start printing. The processes (Steps S412 to S425) from transmission of the job start notification from the host PC 300 to transmission of the response from the printer 600 that receives the device release command are the same as the processes (Steps S312 to S325) of Fig. 9 according to the second embodiment, and thus explanation thereof is omitted.

As explained above, in the printer 600, the recovery off mode (jam-recovery off mode) for not recovering the process related to the print failure upon recovery from the print failure (jam) having occurred in the printer 600 can be set from the host PC 300 side using the device acquisition command received from the host PC 300. Thus, it is not always necessary to restart the printing even after recovery from the print failure, which allows improvement of usability. Further, when the printer 600 is set to the recovery off mode, discard of confidential papers or the like by means of deletion of the unprinted print data can be instructed from the host PC 300, and thus further improving the usability.

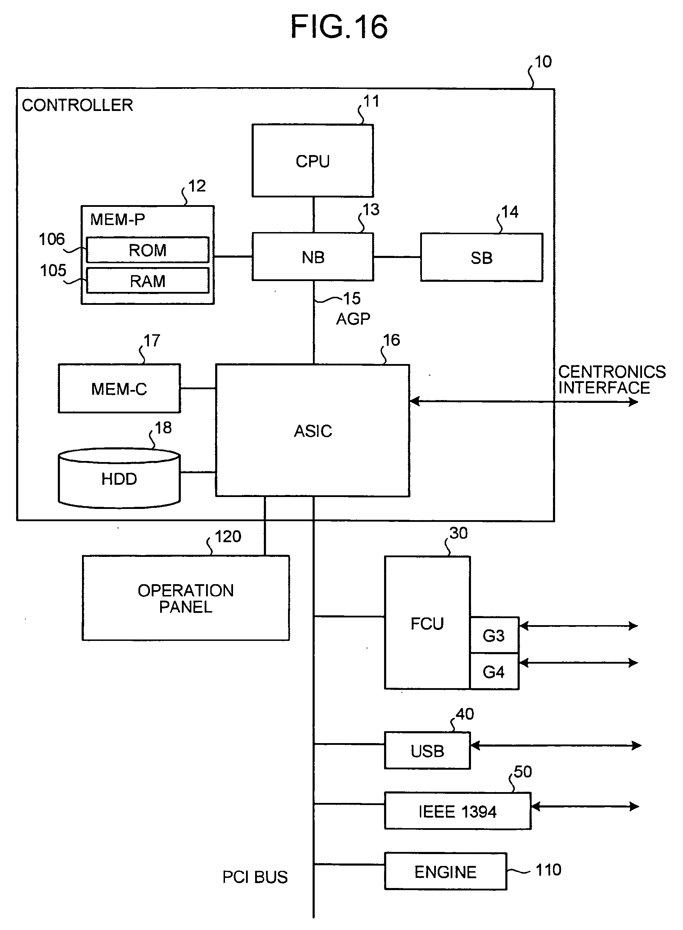

Fig. 16 is a block diagram of a hardware configuration of the printers 100, 500, and 600 according to the first to the third embodiments. Each of the printers 100, 500, and 600 includes a controller 10 and an engine unit (engine) 110 which are connected to each other through a peripheral component interconnect (PCI) bus. The controller 10 controls the whole of the respective printers 100, 500, and 600 and also controls drawings, communications, and inputs from an operation unit (not shown). The engine unit 110 is a printer engine or the like which can be connected to the PCI bus. The engine unit 110 can be a monochrome plotter, a one-drum color plotter, a four-drum color plotter, a scanner, or a facsimile unit. The engine unit 110 includes an engine portion such as a plotter, and also includes an image processing portion such as error diffusion and gamma-conversion.

The controller 10 includes a central processing unit (CPU) 11, a northbridge (NB) 13, a system memory (MEM-P) 12, a southbridge (SB) 14, a local memory (MEM-C) 17, an application specific integrated circuit (ASIC) 16, and a hard disk drive (HDD) 18. The NB 13 and the ASIC 16 are connected to each other through an accelerated graphics port (AGP) bus 15. The MEM-P 12 includes the ROM 106 and the RAM 105.

The CPU 11 controls the whole of the respective printers 100, 500, and 600, and has a chipset including the NB 13, the MEM-P 12, and the SB 14. The CPU 11 is connected to other devices through the chipset.

The NB 13 is a bridge that connects the CPU 11 to the MEM-P 12, the SB 14, and the AGP 15, and includes a memory controller, a PCI master, and an AGP target. The memory controller controls read/write from/to the MEM-P 12.

The MEM-P 12 is a system memory used as a memory for storage of programs and data, a memory for expansion thereof, and a memory of image drawing for the printer, and includes the ROM 106 and the RAM 105. The ROM 106 is a read only memory used as the memory for storage of the programs and data, and the RAM 105 is a rewritable and readable memory used as the memory for expansion of the programs and data and as a memory for image drawing for the printer.

The SB 14 is a bridge that connects the NB 13 to a PCI device and peripheral devices. The SB 14 is connected to the NB 13 through the PCI bus, and the PCI bus is also connected with a network interface (I/F) or the like.

The ASIC 16 is an integrated circuit (IC) in use for image processing which includes a hardware element for image processing. The ASIC 16 serves as a role of a bridge used to connect the AGP 15, the PCI bus, the HDD 18, and the MEM-C 17 to each other. The ASIC 16 includes a PCI target and an AGP master, an arbiter (ARB) that forms a core of the ASIC 16, a memory controller that controls the MEM-C 17, a plurality of direct memory access controllers (DMACs) that rotate image data by a hardware logic or the like, and a PCI unit that performs data transfer with the engine unit 110 via the PCI bus. Connected to the ASIC 16 are a fax control unit (FCU) 30, a universal serial bus (USB) 40, and an IEEE 1394 (the Institute of Electrical and Electronics Engineers 1394) interface 50, through the PCI bus.

The MEM-C 17 is a local memory used as an image buffer for copying and a code buffer, and the HDD 18 is a storage that stores therein image data, programs, font data, and forms.

The AGP 15 is a bus interface for graphics accelerator card that is proposed to increase the speed of graphic processing, and high-throughput direct access to the MEM-P 12 allows the speed of the graphics accelerator card to be increased.

It is noted that image forming programs executed by the printers 100, 500, and 600 according to the first to the third embodiments respectively are provided by being preinstalled in the ROM or the like.

The image forming programs executed by the printers 100, 500, and 600 according to the first to the third embodiments may be configured so as to be provided by being recorded in a computer-readable recording medium such as a compact disk read only memory (CD-ROM), a flexible disk (FD), compact disk recordable (CD-R), and a digital versatile disk (DVD) in a file of an installable format or of an executable format.

Furthermore, the image forming programs executed by the printers 100, 500, and 600 according to the first to the third embodiments may be provided by being stored in a computer connected to a network such as the Internet and being downloaded via the network. The image forming programs executed by the printers 100, 500, and 600 according to the first to the third embodiments may also be provided or distributed via a network such as the Internet.

Each of the image forming programs executed by the printers 100, 500, and 600 according to the first to the third embodiments is configured with modules including the components (reception units 151 and 551, determination units 152 and 652, setting units 153 and 653, transmission units 154, 554, and 654, and printing units 155, 555, and 655). As actual hardware, the CPU (processor) reads each of the image forming programs from the ROM and executes it, and the components are thereby loaded on a main storage unit. Thus, the reception units 151 and 551, the determination units 152 and 652, the setting units 153 and 653, the transmission units 154, 554, and 654, and the printing units 155, 555, and 655 are generated on the main storage unit.

According to one aspect of the present invention, when an output failure having occurred in the image forming apparatus is recovered, whether to prevent restart of an output can be set from the information processing apparatus using the received device acquisition command which is an instruction from the information processing apparatus to the image forming apparatus, and thus the usability can be improved.

According to another aspect of the present invention, when an output failure having occurred in the image forming apparatus is recovered, restart of an output can be prevented, and thus any process after recovery from the output failure in the image forming apparatus can be set from the information processing apparatus side, and thus the usability can be further improved.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image forming apparatus connected to an information processing apparatus through a network, the image forming apparatus comprising:
a mode storage unit (104) configured to store therein an operation mode;
a reception unit (151; 551) that receives a device acquisition command that contains an operation mode, output-object data, and an output request of the output-object data from the information processing apparatus;
a determination unit (152; 652) that determines whether the operation mode specified in the device acquisition command is an auto-restart prevention mode, the auto-restart prevention mode being a mode for preventing restart of output of the output-object data after recovery from an output failure having occurred during reception of the output-object data;
a setting unit (153; 653) that stores, when the determination unit determines that the operation mode is the auto-restart prevention mode, the auto-restart prevention mode in the mode storage unit thereby setting the auto-restart prevention mode as an operation mode;
a transmission unit (154; 654) that transmits device information indicating that the auto-restart prevention mode is set in the image forming apparatus to the information processing apparatus; and
an outputting unit (155) that outputs the output-object data specified in the device acquisition command according to the operation mode set by the setting unit.

2. The image forming apparatus according to claim 1, wherein
the reception unit (151) receives a status monitor command that is an instruction to monitor a status of the image forming apparatus from the information processing apparatus after an output failure occurs during reception of the output-object data,
the determination unit (152) determines, after the output failure is recovered, whether the operation mode has been set to the auto-restart prevention mode, based on whether the auto-restart prevention mode has been stored in the mode storage unit, and
the outputting unit (155) restarts outputting of the output-object data when the determination unit determines that the operation mode has not been set to the auto-restart prevention mode.

3. The image forming apparatus according to claim 2, wherein when the determination unit (152) determines that the operation mode has been set to the auto-restart prevention mode, the outputting unit does not restart outputting of the output-object data.

4. The image forming apparatus according to claim 1, further comprising a storage unit (105) that temporarily stores therein the output-object data received by the reception unit, wherein
the reception unit (551) receives a cancel command indicating that the output-object data being not-yet-output is to be discarded, from the information processing apparatus after an output failure occurs during reception of the output-object data,
the determination unit (152) determines, after the output failure is recovered, whether the operation mode has been set to the auto-restart prevention mode, based on whether the auto-restart prevention mode has been stored in the mode storage unit, and
the outputting unit (155) deletes the output-object data being not-yet-output stored in the storage unit when the determination unit determines that the operation mode has not been set to the auto-restart prevention mode.

5. The image forming apparatus according to claim 1, wherein
the determination unit (652) determines whether the operation mode specified in the device acquisition command is a recovery off mode that is a mode for not recovering a process related to an output failure occurring during reception of the output-object data,
the setting unit (653) stores, when the determination unit determines that specified operation mode is the recovery off mode, the recovery off mode in the mode storage unit thereby setting the recovery off mode as an operation mode, and
the transmission unit (654) transmits device information indicating that the recovery off mode has been set in the image forming apparatus to the information processing apparatus.

6. The image forming apparatus according to claim 5, further comprising a storage unit (105) that temporarily stores therein the output-object data received by the reception unit, wherein
the reception unit (151) receives a status monitor command that is an instruction to monitor a status of the image forming apparatus from the information processing apparatus after an output failure occurs during reception of the output-object data,
the determination unit (152) determines, after the output failure is recovered, whether the operation mode has been set to the recovery off mode, based on whether the recovery off mode has been stored in the mode storage unit, and
the outputting unit (155) deletes the output-object data being not-yet-output stored in the storage unit when the determination unit determines that the operation mode has been set to the recovery off mode.

7. An image forming method that is realized on an image forming apparatus that is connected to an information processing apparatus through a network, the image forming method comprising:
receiving a device acquisition command that contains an operation mode, output-object data, and an output request of the output-object data from the information processing apparatus;
determining whether the operation mode specified in the device acquisition command is an auto-restart prevention mode, the auto-restart prevention mode being a mode for preventing restart of output of the output-object data after recovery from an output failure having occurred during reception of the output-object data;
setting, when it is determined at the determining that the operation mode is the auto-restart prevention mode, an operation mode of the image forming apparatus to the auto-restart prevention mode;
transmitting device information indicating that the auto-restart prevention mode is set in the image forming apparatus to the information processing apparatus; and
outputting the output-object data specified in the device acquisition command according to the operation mode set at the setting.

8. The image forming method according to claim 7, wherein
the receiving includes receiving a status monitor command that is an instruction to monitor a status of the image forming apparatus from the information processing apparatus after an output failure occurs during reception of the output-object data,
the determining includes determining, after the output failure is recovered, whether the operation mode has been set to the auto-restart prevention mode, based on whether the auto-restart prevention mode has been stored in a mode storage unit, and
the outputting includes restarting outputting of the output-object data when it is determined at the determining that the operation mode has not been set to the auto-restart prevention mode.

9. The image forming method according to claim 8, wherein when it is determined at the determining that the operation mode has been set to the auto-restart prevention mode, the outputting includes not restarting outputting of the output-object data.

10. The image forming method according to claim 7, wherein
the receiving includes receiving a cancel command indicating that the output-object data being not-yet-output is to be discarded, from the information processing apparatus after an output failure occurs during reception of the output-object data,
the determining includes determining, after the output failure is recovered, whether the operation mode has been set to the auto-restart prevention mode, based on whether the auto-restart prevention mode has been stored in a mode storage unit, and
the outputting includes deleting the output-object data being not-yet-output stored in a storage unit when it is determined at the determining that the operation mode has not been set to the auto-restart prevention mode.

11. The image forming method according to claim 7, wherein
the determining includes determining whether the operation mode specified in the device acquisition command is a recovery off mode that is a mode for not recovering a process related to an output failure occurring during reception of the output-object data,
the setting includes setting, when it is determined at the determining that specified operation mode is the recovery off mode, an operation mode of the image forming apparatus to the recovery off mode, and
the transmitting includes transmitting device information indicating that the recovery off mode has been set in the image forming apparatus to the information processing apparatus.

12. The image forming method according to claim 11, wherein
the receiving includes receiving a status monitor command that is an instruction to monitor a status of the image forming apparatus from the information processing apparatus after an output failure occurs during reception of the output-object data,
the determining includes determining, after the output failure is recovered, whether the operation mode has been set to the recovery off mode, based on whether the recovery off mode has been stored in a mode storage unit, and
the outputting includes deleting the output-object data being not-yet-output stored in a storage unit when it is determined at the determining that the operation mode has been set to the recovery off mode.

13. A computer program product that includes computer program codes stored on a computer-readable recording medium that when executed on an image forming apparatus that is connected to an information processing apparatus through a network causes the image forming apparatus to execute:
receiving a device acquisition command that contains an operation mode, output-object data, and an output request of the output-object data from the information processing apparatus;
determining whether the operation mode specified in the device acquisition command is an auto-restart prevention mode, the auto-restart prevention mode being a mode for preventing restart of output of the output-object data after recovery from an output failure having occurred during reception of the output-object data;
setting, when it is determined at the determining that the operation mode is the auto-restart prevention mode, an operation mode of the image forming apparatus to the auto-restart prevention mode;
transmitting device information indicating that the auto-restart prevention mode is set in the image forming apparatus to the information processing apparatus; and
outputting the output-object data specified in the device acquisition command according to the operation mode set at the setting.

14. The computer program product according to claim 13, wherein
the receiving includes receiving a status monitor command that is an instruction to monitor a status of the image forming apparatus from the information processing apparatus after an output failure occurs during reception of the output-object data,
the determining includes determining, after the output failure is recovered, whether the operation mode has been set to the auto-restart prevention mode, based on whether the auto-restart prevention mode has been stored in a mode storage unit, and
the outputting includes restarting outputting of the output-object data when it is determined at the determining that the operation mode has not been set to the auto-restart prevention mode.

15. The computer program product according to claim 14, wherein when it is determined at the determining that the operation mode has been set to the auto-restart prevention mode, the outputting includes not restarting outputting of the output-object data.

16. The computer program product according to claim 13, wherein
the receiving includes receiving a cancel command indicating that the output-object data being not-yet-output is to be discarded, from the information processing apparatus after an output failure occurs during reception of the output-object data,
the determining includes determining, after the output failure is recovered, whether the operation mode has been set to the auto-restart prevention mode, based on whether the auto-restart prevention mode has been stored in a mode storage unit, and
the outputting includes deleting the output-object data being not-yet-output stored in a storage unit when it is determined at the determining that the operation mode has not been set to the auto-restart prevention mode.

17. The computer program product according to claim 13, wherein
the determining includes determining whether the operation mode specified in the device acquisition command is a recovery off mode that is a mode for not recovering a process related to an output failure occurring during reception of the output-object data,
the setting includes setting, when it is determined at the determining that specified operation mode is the recovery off mode, an operation mode of the image forming apparatus to the recovery off mode, and
the transmitting includes transmitting device information indicating that the recovery off mode has been set in the image forming apparatus to the information processing apparatus.

18. The computer program product according to claim 17, wherein
the receiving includes receiving a status monitor command that is an instruction to monitor a status of the image forming apparatus from the information processing apparatus after an output failure occurs during reception of the output-object data,
the determining includes determining, after the output failure is recovered, whether the operation mode has been set to the recovery off mode, based on whether the recovery off mode has been stored in a mode storage unit, and
the outputting includes deleting the output-object data being not-yet-output stored in a storage unit when it is determined at the determining that the operation mode has been set to the recovery off mode.
